(19) Europäisches Patentamt / European Patent Office / Office européen des brevets

(11) **EP 3 158 384 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **15730966.7**

(22) Anmeldetag: **19.06.2015**

(51) Internationale Patentklassifikation (IPC):
**G01J 3/12** (2006.01)     **G02F 1/11** (2006.01)
**G02B 21/16** (2006.01)     **G02F 1/33** (2006.01)
**G02B 21/00** (2006.01)

(52) Gemeinsame Patentklassifikation (CPC):
**G01J 3/1256; G02B 21/002; G02B 21/16;
G02F 1/113; G02F 1/116; G02F 1/33;**
G02F 2203/21

(86) Internationale Anmeldenummer:
**PCT/EP2015/001240**

(87) Internationale Veröffentlichungsnummer:
**WO 2015/192967 (23.12.2015 Gazette 2015/51)**

(54) **VERFAHREN UND VORRICHTUNG ZUR ANSTEUERUNG EINES AKUSTOOPTISCHEN BAUTEILS**

METHOD AND APPARATUS FOR CONTROLLING AN ACOUSTO-OPTICAL DEVICE

DISPOSITIF ET PROCÉDÉ POUR LA COMMANDE D'UN COMPOSANT ACOUSTO-OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2014 DE 102014009142**

(43) Veröffentlichungstag der Anmeldung:
**26.04.2017 Patentblatt 2017/17**

(73) Patentinhaber: **Carl Zeiss Microscopy GmbH
07745 Jena (DE)**

(72) Erfinder:
• **ROSCHER, Burkhard**
**07745 Jena (DE)**
• **WILHELM, Stefan**
**07745 Jena (DE)**
• **MÖHLER, Gunter**
**04720 Mochau (DE)**

(74) Vertreter: **Meyer, Jork
Carl Zeiss AG
Patentabteilung
Carl-Zeiss-Promenade 10
07745 Jena (DE)**

(56) Entgegenhaltungen:
**DE-A1- 102006 053 187     US-A- 3 729 251**

• **TIAN F ET AL: "INTERCHANNEL INTERFERENCE IN MULTIWAVELENGTH OPERATION OF INTEGRATED ACOUSTO-OPTICAL FILTERS AND SWITCHES", JOURNAL OF LIGHTWAVE TECHNOLOGY, IEEE SERVICE CENTER, NEW YORK, NY, US, vol. 13, no. 6, 1 June 1995 (1995-06-01), pages 1146 - 1154, XP000520988, ISSN: 0733-8724, DOI: 10.1109/50.390232**

EP 3 158 384 B1

**Beschreibung**

**Stand der Technik**

Ein - Lasersystem in einem Laser- Scanning-Mikroskop, wie unter anderem in EP 1 795 938 A2, DE 19702753C2 beschrieben, weist zur Wellenlängenauswahl und zur Beeinflussung der Intensität des Laserlichts ein akusto-optisches Element (AOTF/AOM) auf, dessen spektrale Eigenschaften an die spektrale Charakteristik des zu übertragenden Laserlichts angepasst sind.

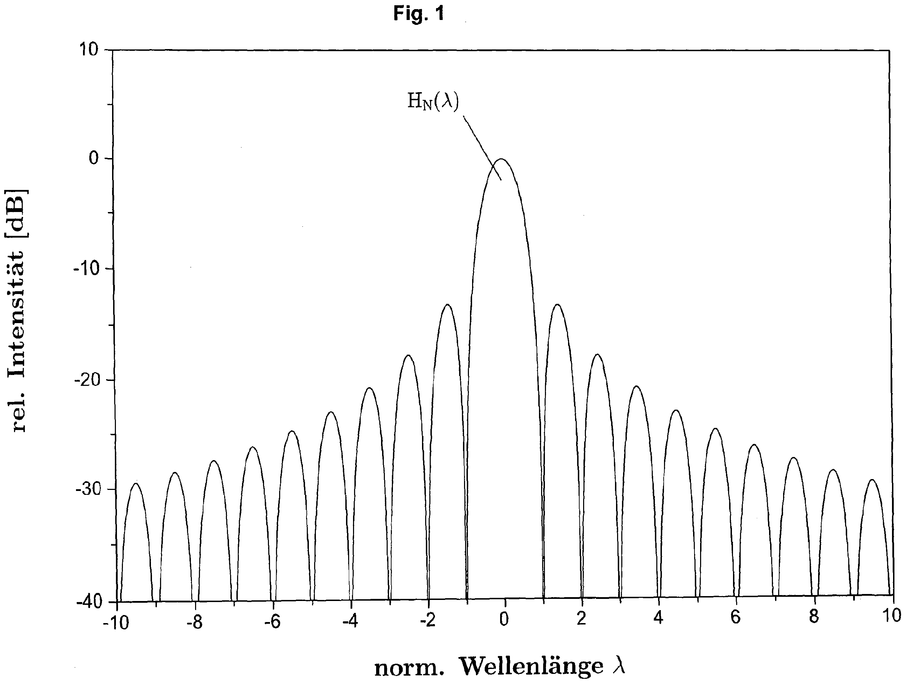

Abb. 1 zeigt beispielhaft eine ideale Übertragungsfunktion $H(\lambda)$ eines AOTF mit rechteckförmigem Transducer bei Anregung mit einem Einzelsinus.

Üblicherweise werden durch den Schnitt des Kristalls und die Geometrie des darauf angebrachten Transducers die optischen Übertragungseigenschaften des akustooptischen Elements (AOTF/AOM) eingestellt. Durch die Wahl der Geometrie können hierbei sowohl die Breite der Hauptkeule als auch das Abklingverhalten der Nebenkeulen der Übertragungsfunktion $H_0(\lambda)$ beeinflusst werden. Häufig wird ein rechteckförmiger Transducer realisiert, dessen normierte Übertragungsfunktion $H_0(\lambda)$ die sinc$^2$-Funktion beschreibt.

$$H_0(\lambda) = \mathrm{sinc}^2\left(\frac{\lambda}{\lambda_0}\right)$$

Die Frequenz $f_n$ des anregenden HF-Signals ist für eine vorgegebene Laserwellenlänge $\lambda_n$ unter anderem durch die Materialeigenschaften und die Geometrie des Kristalls bestimmt. Sie ist umgekehrt proportional zu der Laserwellen-länge $\lambda_n$, die sich durch das angeregte Beugungsgitter beeinflussen lässt.

$$\lambda_n \sim \frac{1}{f_n}$$

Die Übertragungsfunktion $H_0(\lambda)$ wird unter anderem durch die folgenden Parameter charakterisiert:

- $B_{3dB}$ - Bandbreite, bei der die Hauptkeule der Übertragungsfunktion auf die Hälfte ihres Maximums abgeklungen ist (auch FWHM - *full width at half maximum*)
- $B_N$ - Abstand der Nullstellen, die die Hauptkeule der Übertragungsfunktion begrenzen

Für die gleichzeitige Beeinflussung von zwei oder mehr Laserlinien ($\lambda_1$, $\lambda_2$, ... $\lambda_n$) enthält das zur Ansteuerung des akusto-optischen Elements verwendete HF-Signal pro Laserlinie einen sinus-förmigen Träger. Jeder sinusförmige Träger der Frequenz $f_1$, $f_2$, ... $f_n$ regt im akusto-optischen Element ein Beugungsgitter für die entsprechende Laserlinie an.

Auf Grund der Beziehung $\lambda_n \sim 1/f_n$ können die Eigenschaften der Übertragungsfunktion auch in Abhängigkeit von der Frequenz des anregenden HF-Signals charakterisiert werden. Man kann insbesondere ein $\Delta f_{BN}$ zur Beschreibung der Breite der Hauptkeule in Abhängigkeit von der Verstimmung der Abstimmfrequenz des Ansteuersignals angeben. Es gilt:

$$\Delta f_{B_N} \sim 1/B_N$$

Für den **rechteckförmigen** Transducer gilt $B_{3dB} = 0{,}89$ und $B_N = 2$. Die Größen $B_N$ und $B_{3dB}$ verhalten sich demnach zueinander wie folgt:

$$B_{3dB} = 0{,}445\,B_N \qquad \text{bzw.} \qquad \text{FWHM} = 0{,}445\,B_N$$

Konventionelle Nutzung des AOTF

Der Abstand $\Delta\lambda$ zweier benachbarter Laserlinien wird mindestens so groß gewählt, dass sich die Hauptkeulen der Übertragungsfunktion $H_0(\lambda)$ des akusto-optischen Elements nicht überlagern. Dies ist gegeben, wenn der Abstand $\Delta\lambda$ zweier Laserlinien nicht kleiner als der Nullstellenabstand $B_N$ der Hauptkeule der Übertragungsfunktion $H_0(\lambda)$ des akusto-optischen Elements ist. Es gilt:

$$\Delta\lambda \geq B_N$$

Für den rechteckförmigen Transducer ergibt sich somit:

$$\Delta\lambda \geq 2{,}247 \; FWHM$$

Die Anpassung der Transducer-Geometrie zur Einstellung der Übertragungseigenschaften geht üblicherweise einher mit einer signifikanten Erhöhung der notwendigen Leistung des hochfrequenten Ansteuersignals des AOTF, um die geforderte Beugungseffizienz von >90% zu erreichen. Im Vergleich zu einem Standard-AOTF mit rechteckförmigen Transducer kann eine Anhebung der HF-Ansteuerleistung je nach Wellenlänge des Laserlichts um bis zu 7dB erforderlich sein. Typische Werte liegen bei >+27dBm (~500mW) für den modifizierten AOTF im Gegensatz zu +20dBm (~100mW) für einen Standard-AOTF.

Die Anhebung der HF-Steuerleistung verursacht eine zusätzliche Erwärmung des akusto-optischen Elements und bewirkt dadurch auf Grund der Abhängigkeit der Schallgeschwindigkeit von der Temperatur im Kristall (z.B. $TeO_2$) eine Änderung seiner optischen Eigenschaften.

Durch die Erwärmung erfährt insbesondere die Übertragungsfunktion $H_0(\lambda)$ eine deutliche spektrale Verschiebung.

Durch das Aufheizen des AOTF-Kristalls auf eine Temperatur deutlich oberhalb der Raumtemperatur (z.B. 50°C) mit einer geregelten elektrischen Heizung kann dieser unerwünschten Temperaturdrift entgegengewirkt werden (DE-19827140-A1).

Alternativ ist es möglich, die Temperaturstabilisierung mit einem Peltierelement vorzunehmen oder eine temperaturgesteuerte Frequenznachführung des HF-Ansteuersignals zu realisieren, wie zum Beispiel in DE202007015506 U1 und in DE19827140 A1 beschrieben.

Lokale Veränderungen der Kristalltemperatur durch kurzzeitige Variation der HF-Ansteuerleistung - zum Beispiel auf Grund von Intensitätsmodulation des Laserlichts während der Bildaufnahme - können durch derartige Verfahren nicht erfasst und kompensiert werden und haben, bezogen auf die erste Beugungsordnung des AOTF, unerwünschte Veränderungen von Winkel und Intensität des Laserlichts durch die spektrale Verschiebung der Übertragungsfunktion $H_0(\lambda)$ zur Folge.

Auftretende Interferenzen bei der Nutzung multipler Wellenlängen sind durch Tian & Herrmann beschrieben (Journal of Lightwave Technology 13: 1146 - 1154; 1995). Die Einstellung eines Bandpasses eines AOTF durch Anregung mit mehreren Frequenzen ist auch aus US3729251 bekannt. Ferner offenbart DE102006053187 A1 ein Mikroskop mit einem AOTF, dessen Bandpass einstellbar ist.

Beschreibung der Erfindung und ihrer Wirkungen und Vorteile

Die Erfindung wird bei einer Vorrichtung bzw. einem Verfahren gemäß den Oberbegriffen der unabhängigen Ansprüche durch die jeweiligen kennzeichnenden Merkmale charakterisiert.

Die durch eine Vorrichtung nach Anspruch 1 bzw. ein Verfahren nach Anspruch 5 definierte Erfindung und ihre Wirkungen und Vorteile werden nachstehend näher erläutert.

Neuartige Nutzung des AOTF

Das akusto-optische Element wird erfindungsgemäß durch zwei oder mehr sinusförmige HF-Signale pro Laserlinie angesteuert. Der spektrale Abstand $\Delta f$ der sinusförmigen HF-Signale wird bewusst so gewählt, dass es zu einer Überlagerung der Hauptkeulen der angeregten Übertragungsfunktionen $H_0(\lambda)$ kommt. Die Überlappung der Hauptkeulen der angeregten Übertragungsfunktionen $H_N(\lambda)$ ist gewollt, da dies durch die Superposition der Einzelübertragungsfunktionen zu einer Verbreiterung der Hauptkeule in der resultierenden Übertragungsfunktion $H_\Sigma(\lambda)$ führt.

Beispiel:

AO Tunable Filter AOTF. nc-VIS von AA Opto-Electronic (Datenblattwerte):

- Optical Wavelength $\lambda$          450 - 700 nm
- Spectral Resolution (FWHM)          1,5 nm
- Drive Frequency f                   153 - 80 MHz
- Abstimmsteilheit $k_{Tune}$          0,292 MHz / nm

Daraus lassen sich mit den oben angegebenen Beziehungen unter Annahme eines rechteckförmigen Transducers die folgenden Werte berechnen:

- Abstand der Nullstellen $B_N$ 3,37 nm$\qquad$($B_N$ = FWHM / 0,445)
- Abstand der Nullstellen $\Delta f_{BN}$ 0,98 MHz$\qquad$($\Delta f_{BN}$ = $k_{Tune}$ · $B_N$)

bei konventioneller Nutzung bedeutet das:

- Mindestabstand der Laserlinien $\Delta\lambda$$\qquad\qquad\qquad\qquad\qquad$$\geq$ 3,37 nm ($\Delta\lambda \geq$ 2,247 · FWHM)
- Abstand der sinusförmigen Träger $\Delta f$ bei Nutzung im Sinne der Erfindung:$\qquad$$\geq$ 0,98 MHz
- Abstand der sinusförmigen Träger $\Delta f$$\qquad\qquad\qquad\qquad\qquad\qquad$< 0,98 MHz

In diesem Datenblatt ist ein Wert von 30kHz/°C für die Drift der AOTF Frequenz in Abhängigkeit von der Temperatur angegeben.

Durch eine geschickte Wahl der Anfangsphasenlage und Amplitude der einzelnen Träger des erzeugten Signals kann man erreichen, dass das Signal I eine (nahezu) konstante Hüllkurve aufweist.

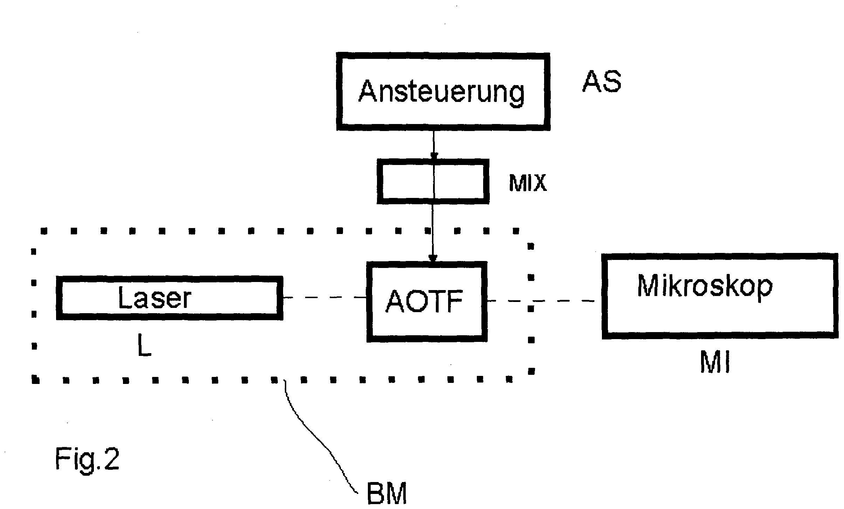

Die Erfindung wird nachstehend anhand der schematischen Zeichnungen in Fig. 2-5 näher erläutert.

In Fig. 2 ist schematisch eine Lichtquelle dargestellt, beispielhaft durch einen Laser L.

Die Lichtquelle kann auch aus mehreren über Strahlteiler zusammengeführten Lasern, wie im Stand der Technik dargestellt, bestehen. Das Licht der Lichtquelle L gelangt über einen AOTF zur Wellenlängenauswahl und Intensitätssteuerung in Richtung eines Mikroskops, vorzugsweise eines Laser - Scanning- Mikroskops.

Lichtquelle L und AOTF können auch in einem (gestrichelt dargestellten) Beleuchtungsmodul BM angeordnet sein, das durch Direktkopplung oder durch eine oder mehrere Lichtleitfasern mit dem mikroskopischen Strahlengang optisch verbunden ist.

Eine Ansteuereinheit AS, meist verbunden mit weiteren Mikroskopfunktionen, dient auch der Ansteuerung des AOTF.

Zwischen der Ansteuereinheit und dem AOTF ist vorteilhaft gemäß der Erfindung als Frequenzgenerator eine Mehrfrequenz- Mischereinheit MIX vorgesehen, deren Wirkungsweise im Weiteren noch näher erläutert wird:
Die Erfindung betrifft die Ansteuerung eines akusto-optischen Elements (AOTF/AOM) mit einem Hochfrequenzsignal. Ein derartiges Signal enthält mehrere hochfrequente Träger, die - nicht zwingend - einen gleichmäßigen Abstand $\Delta f$ zueinander haben und identische oder unterschiedliche Signalamplituden aufweisen.

Diese Art der Ansteuerung bewirkt, dass mehrere durch die Kristall- und Transducer-Geometrie vorgegebene Übertragungsfunktion $H_0(\lambda)$ überlagert werden, welche um ein Vielfaches von $\Delta f$ zueinander verschoben sind und durch die Amplitude des jeweils anregenden Einzelträgers bewertet werden.

Die resultierende Übertragungsfunktion $H_N(\lambda)$ ergibt sich aus der Superposition der spektral verschobenen Übertragungsfunktion $H_0(\lambda)$ der das akusto-optische Element anregenden Einzelträger.

Bezüglich des Abklingverhaltens der Nebenkeulen der Übertragungsfunktion ist es sinnvoll, den Trägerabstand $\Delta f$ des ansteuernden Signals so zu wählen, dass die Hauptkeulen benachbarter Übertragungsfunktionen die Minima der jeweils direkten Nachbarn ergänzen.

Die Übertragungsfunktion $H_N(\lambda)$ des akusto-optischen Elements erfährt durch diese Ansteuerung und der daraus resultierenden Superposition mehrerer Übertragungsfunktionen $H_0(\lambda)$ eine spektrale Spreizung, welche insbesondere eine Aufweitung ihrer Hauptkeule zur Folge hat. Das Abklingverhalten der Nebenkeulen, welches bei rechteckförmigen Transducern durch die sinc$^2$-Funktion vorgegeben ist, verändert sich hingegen nicht oder nicht signifikant.

Die erfindungsgemässe Anregung eines akusto-optischen Elements (AOTF/AOM) erlaubt es demnach, die spektrale Breite der Hauptkeule der Übertragungsfunktion beliebig zu vergrößern, ohne das Abklingverhalten der Nebenkeulen wesentlich zu verändern. Dies ermöglicht, die Hauptkeule der Übertragungsfunktion so aufzuspreizen, dass sowohl der Puls eines Lasersystems wie in u.a. EP 1 795 938 A2 beschrieben optimal übertragen wird, als auch der Temperaturgang des Kristalls keinen Einfluss mehr auf die Übertragung von Laserlicht einer bestimmten Wellenlänge hat. Dies gelingt dadurch, dass die Breite der Hauptkeule durch die Anzahl der Träger des Hochfrequenzsignales und ihre Abstände untereinander so weit aufgespreizt wird, dass der zu übertragende Puls mit seiner spektralen Breite oder auch die zu übertragende Wellenlänge eines Gas- oder DPSS Lasersystems auch bei maximaler Temperaturdrift des Kristalls noch innerhalb der Hauptkeule der Übertragungsfunktion liegt. Der Temperaturbereich sollte dabei Umgebungstemperaturen im Bereich zwischen 15 °C und 35 °C umfassen, wobei Arbeitstemperatur des Kristalls um etwa 20 °C höher als die Umgebungstemperatur liegen kann.

Durch die erfindungsgemässe Lösung zur Ansteuerung akusto-optischer Elemente (AOTF/AOM) wird es möglich, ohne Anpassung der Transducer-Geometrie, das heisst unter Verwendung von Standard-Bauteilen, die spektralen Eigenschaften des Kristalls an die spektralen Eigenschaften des eingekoppelten Laserlichts anzupassen. Ein zusätzlicher positiver Effekt besteht darin, dass vollständig auf die Heizung der Kristalle verzichtet werden kann. Dies verringert den nachteiligen Eintrag von Wärme im System. Durch den Wegfall der Heizung und der dafür notwendigen elektronischen und mechanischen Bauelemente wird der Entwurf kompakterer Baugruppen möglich, die ein höheres Maß an Systemintegration erlauben. Des Weiteren treten auch keine nachteiligen Effekte durch lokale Erwärmungen der Kristalle mehr auf, da die dadurch verursachte Drift der Übertragungsfunktion ebenfalls durch die Aufweitung ihrer Hauptkeule aufgefangen wird.

Vorteilhaft ist zudem die nahezu rechteckförmige Charakteristik der Hauptkeule der Übertragungsfunktion $H_N(\lambda)$, welche sicherstellt, dass Winkel und Intensität des Laserlichts in der ersten Beugungsordnung des AOTF über den gesamten spezifizierten Temperaturbereich von z.B. 15°C bis 45°C stabil bleibt.

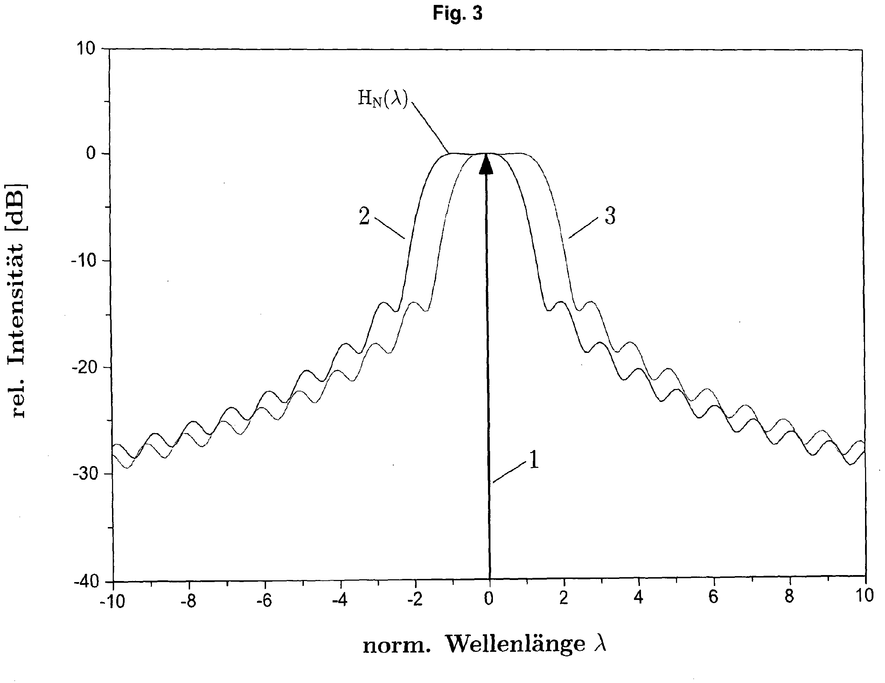

Das Prinzip der Kompensation der Temperaturdrift bei Ansteuerung des akustooptischen Elements mit einem hochfrequenten Signal verdeutlicht Abbildung 3.

Sie zeigt das erfindungsgemässe Prinzip der Kompensation der Temperaturdrift eines AOTF/AOM durch Ansteuerung des Kristalls mit fünf Trägern im Wesentlichen gleicher Leistung.

Die Übertragungsfunktion $H_N(\lambda)$ bei Raumtemperatur (2) wird durch Erwärmung des Kristalls spektral verschoben (3); die Breite ihrer Hauptkeule und das Abklingverhalten der Nebenkeulen werden dadurch nicht beeinflusst. Durch eine geeignete Wahl von Trägeranzahl und -abstand wird die Hauptkeule der Übertragungsfunktion durch Überlagerung mehrerer einzelner Hauptkeulen spektral so aufgespreizt, dass die Laserlinie (1) mit einer festen Wellenlänge über den gesamten Temperaturbereich unverfälscht übertragen wird.

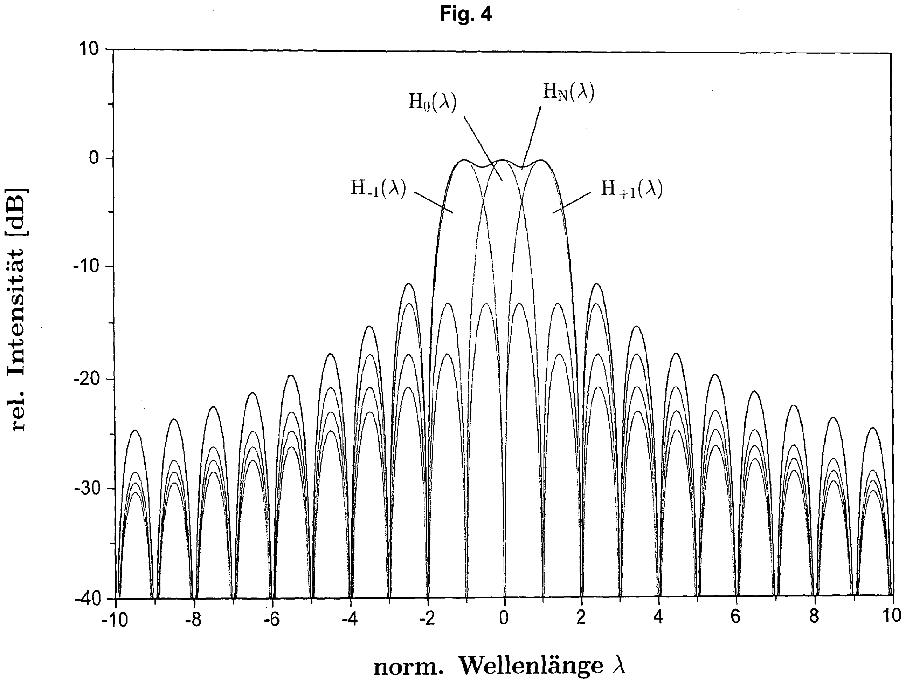

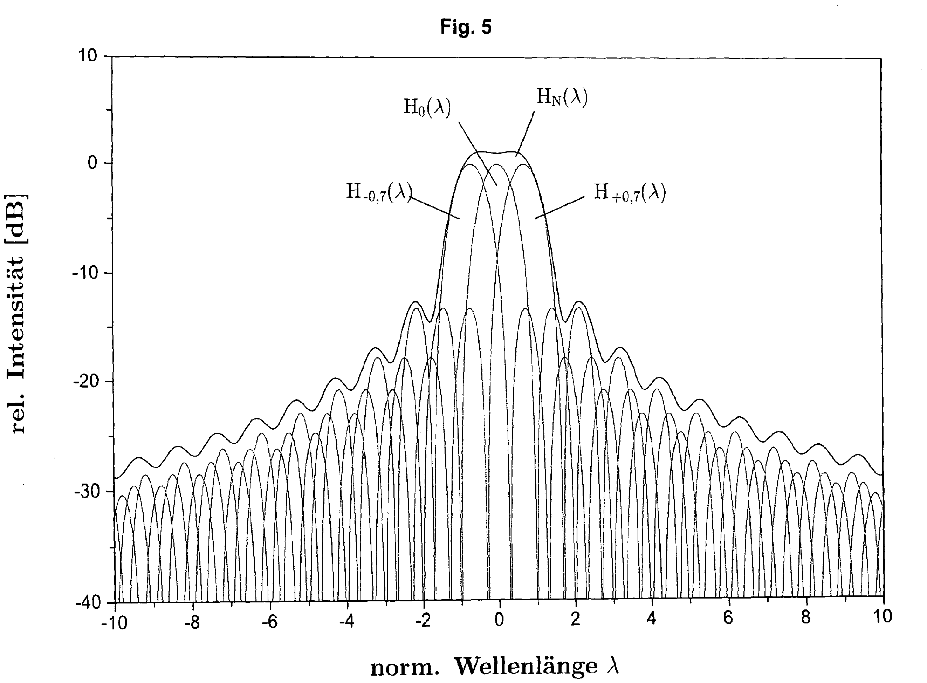

In Abb. 4 und 5 soll die Entstehung der Summen-Übertragungsfunktion bei Ansteuerung eines AOTF mit einem OFDM-Signal (Orthogonal Frequency-Division Multiplexing, deutsch Orthogonales Frequenzmultiplexverfahren) weiter verdeutlicht werden.

In beiden Abbildungen wird ein OFDM-Signal mit drei Trägern verwendet - die resultierende Übertragungsfunktion $HN(\lambda)$ ergibt sich also aus der Superposition von jeweils drei spektral um $\lambda$ bzw. $0{,}7\,n\,\lambda$ gegeneinander verschobenen Kurven $Ho(\lambda)$, $H+1(\lambda)$ $H-1(\lambda)$ in Fig.4 und $Ho(\lambda)$ $H+0{,}7(\lambda)$ $H-0{,}7(\lambda)$.

Die Abbildungen unterscheiden sich in der Größe der spektralen Verschiebung. In der Zeichnung Abb.4 die Verschiebung so gewählt, daß die Hauptkeule einer Übertragungsfunktion jeweils in ein Minimum der benachbarten Funktion fällt. In der Zeichnung 5 ist die Verschiebung etwas geringer (0,7 statt 1).

Die Erzeugung des hochfrequenten Signals erfolgt vorzugsweise mit einem I/Q-Mischer, welcher sowohl analog als auch digital ausgeführt sein kann. Die komplexen Basisbandsignale zur Ansteuerung des Inphase- und Quadraturpfads des I/Q-Mischers lassen sich bei äquidistanten Trägerabständen des Signals vorteilhaft mit Hilfe der inversen diskreten Fouriertransformation (IDFT) berechnen.

Der I/Q-Mischer außerdem hat die vorteilhafte Eigenschaft, die Seitenbänder des eingestellten Hauptsignals zu unterdrücken, so dass eine optimale Hauptkeule eines Signals erzeugt werden kann.

Zur Einstellung des Frequenzgenerators wie des I/Q Mischers kann vorteilhaft eine gemessene Verteilung der temperaturabhängigen Frequenzdrift des AOTF herangezogen werden, wobei vorteilhaft beispielsweise eine Monitordiode im Strahlengang angeordnet ist, die die Intensitätsveränderung der Signalübertragung des AOTF in Anhängigkeit von der Umgebungstemperatur erfasst.

Die Ansteuerung des beschriebenen Signalgenerators zur Erzeugung des Signales kann dann vorteilhaft derart erfolgen, dass die entstandene verbreiterte Übertragungsfunktion für einen gewünschten Temperaturbereich im Wesentlichen eine gleiche spektrale Charakteristik aufweist.

Zu diesem Zweck kann auch vorteilhaft mit dem Signalgenerator ein Optimierungsverfahren erfolgen, um in Abhängigkeit von der vorgegebenen Temperaturdifferenz, in der der AOTF gleiche Übertragungscharakteristik aufweist eine optimale Anzahl und Verteilung der spektral versetzten Übertragungsfunktionen zu erzeugen.

Die Hochfrequenzsignale zur Ansteuerung des Signalgenerators wie des I/Q-Mischers können vorteilhaft mit einem frei programmierbaren Bauteil wie einem FPGA erzeugt werden.

Die Hochfrequenzsignale zur Ansteuerung des Signalgenerators wie des I/Q- Mischers können vorteilhaft mit einem frei programmierbaren Bauteil wie einem FPGA erzeugt werden.

FPGA sind in einem völlig anderen Zusammenhang bereits im Zusammenhang mit Laser-Scanning- Mikroskopen beschrieben worden: DE102006034905 A1, DE19858456 A1.

Durch die Erfindung werden in unerwartet einfacher und dennoch sehr variabler Weise die im obengenannten Stand der Technik beschriebenen aufwändigen Versuche, das Problem der Temeraturabhängigkeit akustooptischer Bauteile zu beheben, gelöst. Die Erfindung ist auf akustooptische Bauteile in Mikroskopen anwendbar, die sowohl auf den Beleuchtungs- als auch auf den Detektionsstrahlengang Einfluss nehmen, beispielsweise zur Einstellung der Bandbreite durchgelassener oder gesperrter Wellenlängenbereiche, auch z.B. bei einer breitbandigen Lichtquelle ("Weisslichtlaser").

**Patentansprüche**

1.  Vorrichtung zur Ansteuerung eines akustooptischen Bauteils für ein Mikroskop,

    wobei das akustooptische Bauteil zum Beeinflussen des als Beleuchtungs- und/oder Detektionslicht eines Mikroskops in Form eines Pulses eines Lasersystems mit einer spektralen Breite oder einer Laserlinie (1) einer bestimmten Wellenlänge hindurchtretenden Laserlichtes eingerichtet ist,
    umfassend

    - das akustooptische Bauteil, wobei das akustooptische Bauteil eine Übertragungsfunktion ($H_0(\lambda)$) aufweist, durch die eine Beziehung zwischen den spektralen Eigenschaften des akustooptischen Bauteils und einer spektralen Charakteristik des zu übertragenden Laserlichts beschrieben ist,
    - und mindestens einen Frequenzgenerator zur Einstellung einer Beleuchtungswellenlänge des Beleuchtungslichts und/oder einer Detektionswellenlänge des Detektionslichts, wobei der Frequenzgenerator zur Steuerung der Beeinflussung mit dem akustooptischen Bauteil verbunden ist,

    **dadurch gekennzeichnet dass**, der Frequenzgenerator derart ausgebildet ist, dass er ein Signal erzeugt, durch das durch Überlagerung mehrerer einzelner Hauptkeulen von Übertragungsfunktionen eine resultierende Hauptkeule einer resultierenden Übertragungsfunktion spektral so aufgespreizt ist, dass der Puls mit seiner spektralen Breite oder die Laserlinie (1) mit einer festen Wellenlänge auch bei maximaler Temperaturdrift des AOTF-Kristalls noch innerhalb der Hauptkeule der Übertragungsfunktion liegt,
    wobei die Ansteuerung des akustooptischen Bauteils durch zwei oder mehrere Ansteuersignale derart erfolgt, dass zwei oder mehr sich überlappende und/oder überlagernde Hauptkeulen der Übertragungsfunktion des akustooptischen Bauteils oder Hauptmaxima erzeugt werden.

2.  Vorrichtung nach Anspruch 1,
    wobei das akustooptische Bauteil ein AOTF oder ein AOM ist.

3.  Vorrichtung nach einem der vorangehenden Ansprüche 1 oder 2
    wobei der Frequenzgenerator ein I/Q Mischer ist.

4.  Verfahren zur Ansteuerung eines akustooptischen Bauteils für ein Mikroskop,

    wobei das akustooptische Bauteil das als Beleuchtungs- und/oder Detektionslicht eines Mikroskops in Form eines Pulses eines Lasersystems mit einer spektralen Breite oder einer Laserlinie (1) einer bestimmten Wellenlänge hindurchtretende Laserlicht beeinflusst,
    wobei eine Einstellung der Beleuchtungs und/oder Detektionswellenlänge mit mindestens einem Frequenzgenerator erfolgt, der mit dem akustooptischen Bauteil verbunden ist und die Beeinflussung steuert,
    **dadurch gekennzeichnet dass**, mittels des Frequenzgenerators ein Signal erzeugt wird, das durch Überlagerung mehrerer einzelner Hauptkeulen von Übertragungsfunktionen eine resultierende Hauptkeule einer resultierenden Übertragungsfunktion spektral so aufspreizt, dass temperaturabhängige Verschiebungen der Übertragungsfunktion das Übertragungsverhalten des Kristalls des akustooptischen Bauteils nicht verändern und der Puls mit seiner spektralen Breite oder die Laserlinie (1) mit einer festen Wellenlänge auch bei maximaler Temperaturdrift des AOTF-Kristalls noch innerhalb der Hauptkeule der Übertragungsfunktion liegt,
    wobei die Ansteuerung des akustooptischen Bauteils durch zwei oder mehrere Ansteuersignale derart erfolgt, dass zwei oder mehr sich überlappende und/oder überlagernde Hauptkeulen der Übertragungsfunktion des akustooptischen Bauteils oder Hauptmaxima erzeugt werden.

5.  Verfahren nach Anspruch 4,
    wobei die Hauptkeulen jeweils durch zwei Minima begrenzt sind.

6.  Verfahren nach einem der Ansprüche 4 oder 5,
    wobei das Verhältnis der Intensität Hauptkeule/ Nebenkeule mindestens 10:1 beträgt.

7.  Verfahren nach einem der Ansprüche 4-6,
    wobei beidseitig der Beleuchtungs- und / oder Detektionswellenlänge spektral verschobene Übertragungsfrequenzen vorgesehen sind.

**8.** Verfahren nach einem der Ansprüche 4-7,
wobei die die Einstellung der Signalverteilung des Frequenzgenerators anhand einer gemessenen Temperaturdriftkurve des akustooptischen Bauteils erfolgt.

**9.** Verfahren nach einem der Ansprüche 4-8,
wobei in einem Optimierungsverfahren die Signalverteilung verändert wird und die entstandene Verteilung bezüglich ihres Temperaturverhaltens erfasst und korrigiert wird.

**10.** Mikroskop, beinhaltend eine Vorrichtung nach einem der Ansprüche 1-3.

**Claims**

**1.** Apparatus for controlling an acousto-optic component for a microscope, wherein the acousto-optic component is configured to influence the laser light which is in the form of a pulse of a laser system with a spectral width or a laser line (1) at a specific wavelength and which passes through said acousto-optic component as illumination and/or detection light of a microscope, comprising

- the acousto-optic component, wherein the acousto-optic component has a transfer function ($H_0(\lambda)$) which describes a relationship between the spectral properties of the acousto-optic component and a spectral characteristic of the laser light to be transmitted,
- and at least one frequency generator for setting an illumination wavelength of the illumination light and/or a detection wavelength of the detection light, wherein the frequency generator, for controlling the influence, is connected to the acousto-optic component,
**characterized in that** the frequency generator is designed such that it creates a signal which, as a result of the superposition of a plurality of individual main lobes of transfer functions, leads to a resultant main lobe of a resultant transfer function being spectrally dispersed such that the spectral width of the pulse or the laser line (1) at a fixed wavelength is still located within the main lobe of the transfer function, even in the event of a maximum temperature drift of the AOTF crystal,
wherein the acousto-optic component is controlled by two or more control signals in such a way that two or more overlapping and/or superimposing main lobes of the transfer function of the acousto-optic component or main maxima are created.

**2.** Apparatus according to Claim 1,
wherein the acousto-optic component is an AOTF or an AOM.

**3.** Apparatus according to either of preceding Claims 1 and 2,
wherein the frequency generator is an I/Q mixer.

**4.** Method for controlling an acousto-optic component for a microscope, wherein the acousto-optic component influences the laser light which is in the form of a pulse of a laser system with a spectral width or a laser line (1) at a specific wavelength and which passes through said acousto-optic component as illumination and/or detection light of a microscope,

wherein the illumination and/or detection wavelength is set using at least one frequency generator that is connected to the acousto-optic component and controls the influence,
**characterized in that** the frequency generator is used to create a signal which, as a result of the superposition of a plurality of individual main lobes of transfer functions, spectrally disperses a resultant main lobe of a resultant transfer function such that temperaturedependent shifts of the transfer function do not modify the transfer behaviour of the crystal of the acousto-optic component, and the spectral width of the pulse or the laser line (1) at a fixed wavelength is still located within the main lobe of the transfer function, even in the event of a maximum temperature drift of the AOTF crystal,
wherein the acousto-optic component is controlled by two or more control signals in such a way that two or more overlapping and/or superimposing main lobes of the transfer function of the acousto-optic component or main maxima are created.

**5.** Method according to Claim 4,
wherein the main lobes are each delimited by two minima.

**EP 3 158 384 B1**

**6.** Method according to either of Claims 4 and 5,
wherein the main lobe intensity/side lobe intensity ratio is at least 10:1.

**7.** Method according to any of Claims 4-6,
wherein spectrally shifted transfer frequencies are provided on both sides of the illumination and/or detection wavelength.

**8.** Method according to any of Claims 4-7,
wherein the signal distribution of the frequency generator is set on the basis of a measured temperaturedrift curve of the acousto-optic component.

**9.** Method according to any of Claims 4-8,
wherein, in an optimization method, the signal distribution is modified, and the arisen distribution is captured and corrected in respect of its temperature behaviour.

**10.** Microscope containing an apparatus according to any of Claims 1-3.

**Revendications**

**1.** Dispositif de commande d'un composant acousto-optique pour un microscope, le composant acousto-optique étant conçu pour influencer la lumière laser passant en tant que lumière d'éclairage et/ou de détection d'un microscope sous la forme d'une impulsion d'un système laser ayant une largeur spectrale ou d'une ligne laser (1) d'une longueur d'onde déterminée, comprenant

- le composant acousto-optique, lequel composant acousto-optique présente une fonction de transfert ($H_0(\lambda)$) par laquelle est décrite une relation entre les propriétés spectrales du composant acousto-optique et une caractéristique spectrale de la lumière laser à transmettre,
- et au moins un générateur de fréquence pour régler une longueur d'onde d'éclairage de la lumière d'éclairage et/ou une longueur d'onde de détection de la lumière de détection, le générateur de fréquence étant relié au composant acousto-optique pour commander l'influence,
**caractérisé en ce que** le générateur de fréquence est conçu de telle sorte qu'il génère un signal au moyen duquel, par superposition de plusieurs lobes principaux individuels de fonctions de transmission, un lobe principal résultant d'une fonction de transmission résultante est étalé spectralement de telle sorte que l'impulsion avec sa largeur spectrale ou la ligne laser (1) avec une longueur d'onde fixe se trouve encore à l'intérieur du lobe principal de la fonction de transmission, même en cas de dérive thermique maximale du cristal AOTF, la commande du composant acousto-optique s'effectuant par deux ou plusieurs signaux de commande de telle sorte que deux lobes principaux ou plus de la fonction de transfert du composant acousto-optique se chevauchant et/ou se superposant, ou que des maxima principaux, soient générés.

**2.** Dispositif selon la revendication 1,
dans lequel le composant acousto-optique est un AOTF ou un AOM.

**3.** Dispositif selon l'une des revendications 1 ou 2 précédentes,
dans lequel le générateur de fréquence est un mélangeur I/Q.

**4.** Procédé de commande d'un composant acousto-optique pour un microscope, le composant acousto-optique influençant la lumière laser passant en tant que lumière d'éclairage et/ou de détection d'un microscope sous forme d'une impulsion d'un système laser avec une largeur spectrale ou une ligne laser (1) d'une longueur d'onde déterminée,

un réglage de la longueur d'onde d'éclairage et/ou de détection étant effectué avec au moins un générateur de fréquence qui est relié au composant acousto-optique et qui commande l'influence,
**caractérisé en ce que**, au moyen du générateur de fréquence, il est produit un signal qui, par superposition de plusieurs lobes principaux individuels de fonctions de transmission, étale spectralement un lobe principal résultant d'une fonction de transmission résultante de telle sorte que des décalages de la fonction de transmission dépendant de la température ne modifient pas le comportement de transmission du cristal du composant acousto-optique et que l'impulsion avec sa largeur spectrale ou la ligne laser (1) avec une longueur d'onde fixe se trouve encore à l'intérieur du lobe principal de la fonction de transmission même en cas de dérive maximale de la température du cristal AOTF,
la commande du composant acousto-optique s'effectuant par deux ou plusieurs signaux de commande de telle sorte que deux lobes principaux ou plus de la fonction de transfert du composant acousto-optique se chevauchant et/ou se superposant, ou que des maxima principaux, soient générés.

5. Procédé selon la revendication 4,
dans lequel les lobes principaux sont délimités chacun par deux minima.

6. Procédé selon l'une des revendications 4 ou 5,
dans lequel le rapport entre l'intensité du lobe principal et celle du lobe secondaire est d'au moins 10:1.

7. Procédé selon l'une des revendications 4 à 6,
dans lequel des fréquences de transmission décalées spectralement sont prévues de part et d'autre de la longueur d'onde d'éclairage et/ou de détection.

8. Procédé selon l'une des revendications 4 à 7,
dans lequel le réglage de la répartition du signal du générateur de fréquence s'effectue à l'aide d'une courbe de dérive de température mesurée du composant acousto-optique.

9. Procédé selon l'une des revendications 4 à 8,
dans lequel la répartition des signaux est modifiée dans un procédé d'optimisation et la répartition obtenue est saisie et corrigée en ce qui concerne son comportement en température.

10. Microscope, comprenant un dispositif selon l'une des revendications 1 à 3.

**Fig. 1**

Fig.2

EP 3 158 384 B1

**Fig. 3**

**Fig. 4**

**Fig. 5**

rel. Intensität [dB]

norm. Wellenlänge $\lambda$

$H_N(\lambda)$

$H_0(\lambda)$

$H_{+0,7}(\lambda)$

$H_{-0,7}(\lambda)$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1795938 A2
- DE 19702753 C2
- DE 19827140 A1
- DE 202007015506 U1
- US 3729251 A
- DE 102006053187 A1
- DE 102006034905 A1
- DE 19858456 A1

**In der Beschreibung aufgeführte Nicht-Patentliteratur**

- **TIAN** ; **HERRMANN**. *Journal of Lightwave Technology*, 1995, vol. 13, 1146-1154